Europäisches Patentamt

European Patent Office

Office européen des brevets

(19)

(11) EP 0 937 962 A2

(12) EUROPÄISCHE PATENTANMELDUNG

(43) Veröffentlichungstag:
25.08.1999 Patentblatt 1999/34

(51) Int. Cl.⁶: $G01B\ 7/34$

(21) Anmeldenummer: 98124628.3

(22) Anmeldetag: 23.12.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 18.02.1998 DE 19806639

(71) Anmelder:
CREAVIS Gesellschaft für Technologie
und Innovation mbH
45764 Marl (DE)

(72) Erfinder:
• Kunz, Roland
45770 Marl (DE)

• Körber, Heinz
01324 Dresden (DE)
• Schmitt, Franz-Josef Dr.
01159 Dresden (DE)
• Weidenhammer, Petra
95503 Hummeltal (DE)
• Werner, Carsten
01824 Königstein (DE)

(74) Vertreter:
Olbricht, Gerhard, Dr.
Degussa-Hüls Aktiengesellschaft
Patente - Marken
Bau 1042 - PB15
45764 Marl (DE)

(54) **Verfahren und Vorrichtung für mikromechanische Untersuchungen der Adhäsion von Mikroteilchen an Oberflächen**

(57) Die Erfindung betrifft ein Rasterkraftmikroskop, bei dem der Cantilever als Mikropipette ausgebildet und eine mit der Mikropipette verbundene Vorrichtung vorhanden ist, die eine Fixierung von Mikroteilchen an der Mündung der Mikropipette durch definierte Aspiration ermöglicht.

EP 0 937 962 A2

**Beschreibung**

Die Erfindung betrifft ein Meßverfahren sowie eine Vorrichtung, mit deren Hilfe das Verhalten von Mikroteilchen bei der Adhäsion an Oberflächen mittels mikromechanischer Kraftmessungen untersucht werden kann.

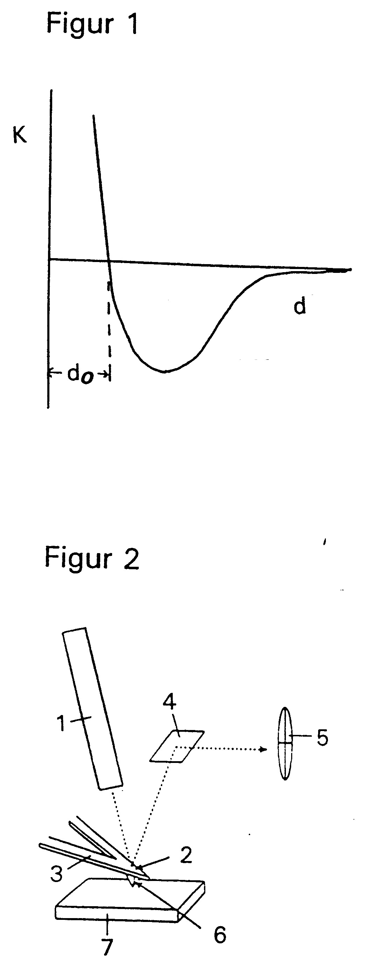

Das Verfahren und die Vorrichtung nach der Erfindung schließen sich an die Rasterkraftmikroskopie an. Das Rasterkraftmikroskop (auch Atomic Force Microscope ("AFM") genannt) mißt ortsabhängig die Auslenkung a einer Meßsonde, nämlich einer am einen Ende in einem Halter fixierten Feder (auch "Cantilever" genannt), als Funktion des Abstandes d zwischen einer am anderen Ende der Feder fixierten Spitze (auch "Tip" genannt) und der Oberfläche. Dabei wird die Beziehung zwischen der Kraft K, die zwischen der Spitze und der Oberfläche wirkt, und dem Abstand d der Spitze zur Oberfläche ausgenutzt, wie sie in Figur 1 dargestellt ist. Wenn sich die Spitze in z-Richtung, d.h. vertikal der Oberfläche-nähert, wirken zunächst immer stärker anziehende (attrahierende) Kräfte, z.B. van der Waals'sche Kräfte. Bei sehr geringem Abstand werden zunehmend abstoßende (repulsive) Kräfte wirksam, die auf die Abstoßung der Elektronenhüllen der Atome auf der Oberfläche einerseits und auf der Spitze andererseits zurückgehen und sich den anziehenden Kräften überlagern. Bei dem Abstand $d_0$ halten sich anziehend und abstoßende Kräfte die Waage, bei noch geringerem Abstand überwiegen die abstoßenden Kräfte. Der Zusammenhang zwischen der Kraft K und dem Abstand d ist in der **Figur 1** dargestellt.

Die vom Abstand d abhängige resultierende Kraft K bewirkt eine Auslenkung a (oder Biegung) des Cantilevers, die mit einem Kraftsensor gemessen werden kann. Ein solcher Kraftsensor ist in **Figur 2** wiedergegeben. Der Laserstrahl der Laserdiode **1** trifft auf ein Reflektionselement **2** auf dem Cantilever (oder der Blattfeder) **3** und wird über einen Spiegel **4** auf die Photodiode **5** gelenkt, die in vier Sektoren geteilt ist. Wenn der Abstand der Spitze (oder Sonde) **6** des Cantilevers **3**) und damit die resultierende Kraft zwischen der Spitze **6** und dem Substrat (oder der Probe) **7**) verändert wird, ändert sich die Auslenkung des Cantilevers **3** und bewegt sich der Laserstrahl über die Oberfläche der geteilten Photodiode **5**. Aus der Veränderung der Lichtintensitäten, die für die vier Sektoren gemessen werden, läßt sich die Auslenkung a des Cantilevers berechnen. Der Zusammenhang zwischen der Auslenkung a und der resultierenden Kraft K wird durch das Hooke'sche Gesetz, $a = -k \cdot K$, beschrieben. Die Federkonstante k gibt die Empfindlichkeit der Meßanordnung wieder. Bei einer technisch realisierbaren Federkonstanten k von 1 N/m und meßbaren Veränderungen des Abstands um 1 Å können Kräfte von <1 nN gemessen werden.

Der Abstand d zwischen der Spitze des Cantilevers und dem Substrat kann mit Hilfe piezoelektrischer Keramiken in Schritten im Nanometer-Bereich variiert werden. Man nutzt dazu die Eigenschaft piezoelektrischer Materialien aus, bei Anregung durch ein elektrisches Feld ihre Dimensionen zu verändern. Es sind Keramiken mit Ausdehnungskoeffizienten von 1 bis 3.000 Å/V bekannt. Wenn man einen Cantilever mit dem einen Ende eines piezoelektrischen keramischen Körper starr verbindet, der einen piezoelektrischen Ausdehnungskoeffizienten von 1 Å/V hat und dessen anderes Ende fixiert ist, so kann man den Abstand zwischen der Spitze des Cantilevers und einem Substrat in Schritten von 0,1 Å verändern, wenn man die Anregungsspannung um jeweils 100 mV variiert.

Zum Rasterkraftmikroskop gehört ein Regelkreis, der im Zusammenwirken mit dem Cantilever und dem Kraftsensor die Positionierung der Spitze in z-Richtung in bezug auf das Substrat ermöglicht. Dieser Regelkreis arbeitet bei einer Betriebsweise, die auf konstante Kraft einregelt, wie folgt. Wenn sich z.B. der Abstand dadurch verringert, daß der Cantilever in x- oder y-Richtung über das Substrat geführt wird und dabei auf eine Erhebung stößt, verändert sich dementsprechend der in der Photodiode **5** erzeugte Strom, der in einem Differentialverstärker verstärkt und zugleich mit dem Referenzwert für die Soll-Kraft verglichen wird. Der Differentialverstärker induziert eine Korrekturspannung, die die piezoelektrische z-Keramik so anregt, daß die Soll-Kraft zwischen der Spitze des Cantilevers und dem Substrat wiederhergestellt wird. Die der Korrekturspannung entsprechende Abstandsänderung d, die die Erhebung an dem Punkt mit den betreffenden x- und y-Koordinaten charakterisiert, wird in einem Computer gespeichert und ergibt mit einer Vielzahl von ähnlichen Speicherwerten für andere Punkte letztendlich ein Bild der Oberfläche des Substrats.

Bei einer Betriebsweise mit variablem Abstand zwischen Spitze und Substrat (und dementsprechend variabler Kraft) ist die Veränderung der Stärke des im Photosensor **5** erzeugten Stroms I ein Maß für die Veränderung des Abstandes zwischen Spitze und Substrat.

Zur Veränderung der Position der Spitze des Cantilevers in x- und y-Richtung sind zwei weitere Piezokeramiken vorhanden. Sie machen es moglich, daß die Spritze die Oberflache des Substrats "abrastert", d.h. in dicht beieinander liegenden parallelen Linien überstreicht, wobei die d- oder I-Werte in entsprechender Dichte gemessen, gespeichert und in ein Bild von der Oberfläche des Substrats umgewandelt werden. Mittels der beiden x- und y-Piezokeramiken können, je nach deren Länge und Ausdehnungskoeffizenten, rechtwinklige Flächen mit Kantenlängen von 200 nm bis 90 μm überstrichen werden.

Eine eingehende Beschreibung der Prinzipien, Ausführungsformen und Betriebsweisen von Rasterkraftmikroskopen findet sich in R. Wiesendanger, Scanning Probe Microscopy and Spectroscopy, Cambridge, University Press, 1994.

Die vorliegende Erfindung nutzt die Rasterkraftmikroskopie für die Untersuchung des Verhaltens von Mikroteilchen bei der Adhäsion an der Oberfläche von Substraten. Die Untersuchungen beziehen sich sowohl auf die Messung von Kräften und die Erstellung von Kraft-Abstands-Diagrammen im Vorfeld der Adhäsion als auch auf Messungen an adhärierenden Mikroteilchen.

In einem ihrer Aspekte ist die Erfindung ein Rasterkraftmikroskop, bei dem der Cantilever als Mikropipette ausgebildet und eine mit der Mikropipette verbundene Vorrichtung vorhanden ist, die eine Fixierung der Mikroteilchen an der Mündung der Mikropipette durch definierte Aspiration ermöglicht.

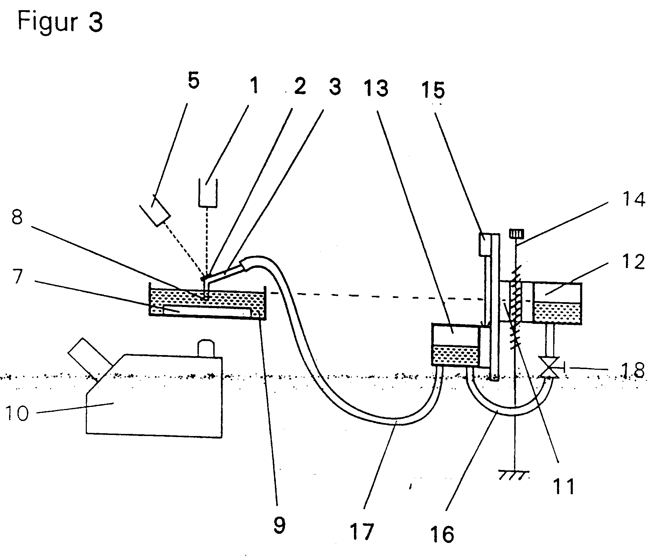

Ein Rasterkraftmikroskop nach der Erfindung ist in **Figur 3** schematisch dargestellt. Dabei bedeutet **1** eine Laserdiode, **2** ein Reflektionselement, **3** den Mikropipettencantilever, **5** die geteilte Photodiode, **8** ein angesaugtes Mikroteilchen als Sonde über dem Substrat **7**, das sich in dem mit einer Flüssigkeit, wie Wasser, gefüllten Untersuchungsgefäß **9** befindet. Unterhalb des Untersuchungsgefäßes **9** ist das Invers-Lichtmikroskop **10** angeordnet, **11** ist das Gestell für die Aspirationseinheit. Diese erzeugt mittels Niveauunterschieden in einem ersten Niveaugefäß **12** und einem zweiten Niveaugefäß **13** eine definierte Aspiration, d.h. einen definierten Unterdruck, welcher das Mikroteilchen **8** ansaugt und als Sonde an der Spritze des Mikropipettencantilevers **3** fixiert, oder einen definierten Überdruck, der das Mikroteilchen **8** wieder freigibt. Das erste Niveaugefaß **12** wird mittels der Hubspindel **14** der Höhe nach verändert, die Feineinstellung der Höhendifferenz erfolgt durch den Mikropräzisionsantrieb **15**. Die Schläuche **16** und **17** lassen die Niveaugefäße **12** und **13** untereinander und mit dem Untersuchungsgefäß **9** kommunizieren. In dem Schlauch **16** ist ein Absperrhahn **18** angeordnet. Dieser ist zu Beginn einer Messung geöffnet, so daß die Flüssigkeit in den Gefäßen **9**, **12** und **13** gleiches Niveau (Anfangsniveau) hat. Schließt man nun den Absperrhahn **18**, so kann man das Mikroteilchen **8** durch Senken des Niveaugefäßes **13** ansaugen und nach der Messung durch Heben des Niveaugefäßes **13** über das Anfangsniveau hinaus wieder freigeben.

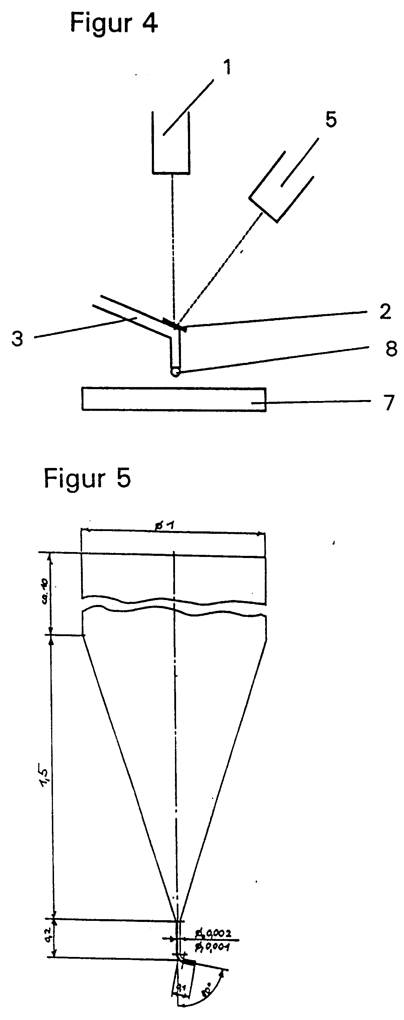

**Figur 4** stellt einen vergrößerten Ausschnitt aus **Figur 3** dar und zeigt die Laserdiode **1**, das Reflektionselement **2**, den Mikropipettencantilever **3** mit dem Mikroteilchen **8** als Sonde über dem Substrat **7** sowie die geteilte Photodiode **5**.

**Figur 5** schließlich zeigt bespielhaft einen erfindungsgemäßen Mikropipettencantilever in Größenverhältnissen, die den tatsächlichen in etwa entsprechen. Die angegebenen Zahlen beziehen sich auf die Dimension Millimeter (mm). Dementsprechend hat die gebogene ausgezogene Spitze einen Außendurchmesser von 2 μm, einen Innendurchmesser von 1 μm und eine Wandstärke von 0,5 μm.

Als Vorrichtung zur Durchführung des erfindungsgemäßen Verfahrens läßt sich beispielsweise ein Rasterkraftmikroskop verwenden, wie es unter der Bezeichnung BioScope von der Firma Digital Instruments, Inc., Santa Barbara, CA, USA angeboten wird, nachdem der vorhandene Cantilever gegen einen erfindungsgemäßen Mikropipetten-Cantilever ausgetauscht und eine mit der Mikropipette verbundenen Vorrichtung angefügt wurde, die eine Fixierung der Mikroteilchen als Sonde an der Mündung der Mikropipette durch definierte Aspiration ermöglicht.

Nach einem anderen Aspekt ist die Erfindung ein Verfahren zur Untersuchung des Verhaltens von Mikroteilchen bei der Adsorption an der Oberfläche von Substraten mittels Rasterkraftmikroskopie, bei dem man ein Rasterkraftmikroskop verwendet, dessen Cantilever als Mikropipette ausgebildet ist, die mit einer Vorrichtung verbunden ist, die eine Fixierung von Mikroteilchen an der Mündung der Mikropipette durch definierte Aspiration ermöglicht.

Das erfindungsgemäße Rasterkraftmikroskop und das erfindungsgemäße Verfahren sind wertvolle Hilfsmittel für Untersuchungen im Zusammenhang mit adhärierenden Mikroteilchen. So erlaubt die Messung der Kraft zwischen einem Bakterium und einer Oberfläche als Funktion des Abstandes einen Schluß auf die Affinität eines bestimmten Bakterienstammes zu einer bestimmten Oberfläche (oder auf das "Besiedelungspotential" des Bakterienstammes für diese Oberfläche). Solche Messungen sind daher nützlich bei der Entwicklung von bakterienabweisenden Materialien, wie sie in der Medizin- und der Hygienetechnik benötigt werden. Bei einer anderen Anwendung kann die Absetzneigung von kolloiden Teilchen auf Oberflächen gemassen werden. Auf diese Weise läßt sich beurteilen, welche Materialien für die Lagerung von kolloidalen Solen günstig sind.

Ein wesentliches Merkmal der Erfindung ist der als Mikropipette ausgebildete Cantilever. In Biophysical Journal **71** (1996), 2155-57, ist ein Rasterkraftmikroskop beschrieben, das mit einer Pipette als Cantilever versehen ist. Die Pipette enthält eine Elektrode und dient als Kraft- und Leitfähigkeitssensor. Dieses Rasterkraftmikroskop eignet sich zur Untersuchung von Membranoberflächen. Es ist nicht vorgesehen. Mikroteilchen an der Mündung einer Mikropipette zu fixieren und ihre Adhäsion auf Substraten zu untersuchen. Daher ist auch keine Vorrichtung vorhanden, mittels derer die Mikroteilchen an der Mündung einer Mikropipette durch definierte Aspiration fixiert werden können.

Die Mikropipette kann aus Geräteglas, z.B. einem Borsilikatglas, oder vorteilhaft aus Quarzglas bestehen. Sie hat beispielsweise einen Schaft mit einem Außendurchmesser von 700 bis 1.500 μm und einem Innendurchmesser von 300 bis 1.300 μm, der zu einer im wesentlichen konischen Spitze ausgezogen wird, und diese Spitze mit einem Außendurchmesser von 1 bis 100 μm und einem Innendurchmesser von 400 nm bis 9 μm wird zweckmäßig so weit abgewinkelt, daß der abgewinkelte Teil mit der Achse des Schaftes in senkrechter Richtung einen Winkel von 90 bis 120° bildet. Die Mündung der ausgezogenen Spitze kann feinpoliert werden, was die Fixierung der Mikroteilchen durch definierte Aspiration erleichtert. Für die Herstellung solcher Mikropipetten durch Spezialapparaturen geeignete dünne Rohre sind im Handel erhältlich. Auf der Mikropipette kann als Reflektionselement 2 ein Glimmerplättchen angebracht werden. Alternativ kann ein Teil der Mikropipette plangeschliffen und in bekannter Weise mit reflektierendem Metall bedampft werden. Die so vorbereitete Mikropipette kann mit dem Schaft in einen Kunststoffblock eingegossen und so am Probenhalter befestigt werden. Sie wird mit der später beschriebenen Vorrichtung zur Fixierung der Mikroteilchen durch definierte Aspiration über einen Schlauch verbunden. Die Bestimmung der Federkonstanten der Mikropipette (oder die Eichung des Rasterkraftmikroskops) kann in ebenfalls bekannter Weise durch Belegung mit Wolfram-Kugeln bekannter Masse und Messung der resultierenden Auslenkung erfolgen (J.P.Cleveland et al., Rev.Sci.Instrum. **64** (2), 403 [1993]; T.J.Senden et al., Langmuir **10**, 1003 [1994]).

Zu den Mikroteilchen, deren Verhalten bei der Adhäsion an der Oberfläche von Substraten erfindungsgemäß untersucht werden kann, zählen inbesondere Bakterien, wie Staphylococcus aureus, Staphylococcus epidermidis, Escherichia coli, Klebsiella pneumoniae, Pseudomonas aeruginosa und Serratia marcescens. Weitere geeignete Untersuchungsobjekte sind Säugetierzellen, wie Thrombocyten, und andere Mikroorganismen, wie der Fungus Candida albicans. Auch anorganische oder organische kolloidale Teilchen von Solen, z.B. aus Metallen, wie Gold, Hydroxiden, Polysiloxanen oder Polymerlatices, sowie Quarzkügelchen eignen sich für Untersuchungen nach der Erfindung. Der Durchmesser der Mikroteilchen, deren Verhalten erfindungsgemäß untersucht werden kann, hängt von dem Durchmesser der Mikropipettenmündung ab und beträgt in der Regel 500 nm bis 10 µm.

Als Substrate, auf denen die Mikroteilchen adhärieren, seien undurchsichtige und insbesondere durchsichtige feste anorganische oder polymere organische Substrate genannt, bespielsweise Metalle. Gläser und polymere Werkstoffe, wie Polyamide, Polyolefine, Polyester, Polyetheresteramide, Polyurethane, Polymethylmethacrylat und Polystyrol.

Ein weiteres wesentliches Merkmal des erfindungsgemäßen Rasterkraftmikroskops ist eine Vorrichtung, mittels derer die Mikroteilchen an der Mündung der Mikropipette durch definierte Aspiration fixiert werden können. Unter Fixierung durch definierte Aspiration ist das Festhalten der Mikroteilchen durch regelbaren Unterdruck innerhalb der Pipette zu verstehen. Der Unterdruck wird am einfachsten durch zwei Niveaugefäße erzeugt, die über ein Schlauchsystem miteinander kommunizierend verbunden sind. Von diesen Gefäßen ist eines auf dem Niveau der Meßkammer fest angeordnet und das andere der Höhe nach verschiebbar. Wenn man die Flüssigkeit in dem verschiebbaren Gefäß über einen Schlauch mit der Mikropipette verbindet, kann man in dieser einen Unterdruck erzeugen, der dem Niveauunterschied der Flüssigkeitsstände in den beiden Niveaugefäßen entspricht. Er kann durch einen Differenzdrucksensor gemessen werden. Im allgemeinen bleibt dieser Unterdruck während der Untersuchungen konstant, insbesondere wenn die Mündung der Mikropipette feinpoliert und/oder das Mikroteilchen weich und somit deformierbar ist, so daß es die Mündung der Mikropipette hermetisch verschließt. Für Untersuchungen über den Zusammenhang zwischen Abstand und resultierender Kraft bei der Adsorption von Bakterien arbeitet man im allgemeinen mit Unterdrükken 0,01 bis 100 mm mbar. Für andere Mikroteilchen läßt sich der optimale Unterdruck unschwer experimentell ermitteln und einstellen. Die auf das Mikroteilchen in Richtung auf die Mikropipettenmündung wirkende, das Mikroteilchen fixierende Kraft ergibt sich als Produkt aus dem Unterdruck und dem Querschnitt der Mikropipettenmündung.

Bei einer vorteilhaften Ausführungsform wird das erfindungsgemäße Rasterkraftmikroskop mit einem Lichtmikroskop, insbesondere einem Invers-Lichtmikroskop, kombiniert. Dieses wird im ersten Aufbau so angeordnet, daß die optische Achse in der Achse der Kraftmessung liegt. Dadurch wird die Positionierung des Mikroteilchens an der Mündung der Pipette erleichtert. Im zweiten Aufbau steht die optische Achse im Winkel von 90° zur Achse der Kraftmessung und ist gegebenenfalls in bezug auf diese Achse der Höhe nach veränderbar. Mit dieser Anordnung kann das Profil der untersuchten Mikroteilchen bestimmt werden, insbesondere deren etwaige Deformation durch Aspiration und/oder Krafteinwirkung. Weiterhin wird die Positionierung des Mikropipetten-Cantilevers damit noch erheblich erleichtert. Schließlich kann man mit dieser zweiten Anordnung auch den Abstand zwischen Mikroteilchen und Substrat überprüfen oder bestimmen. Statt mit nur einem Invers-Lichtmikroskop zu arbeiten und für dieses zwei Anordnungen vorzusehen, kann man natürlich auch mit zwei entsprechend installierten Invers-Lichmikroskopen arbeiten.

Geeignete Lichtmikroskope haben z.B. ein Objektiv mit 20- bis 100-facher Vergrößerung und einem Arbeitsabstand von <5mm. Zweckmäßig wird eine optische Leervergrößerung über ein Zoom-Modul angeschlossen. Das Lichtmikroskop sollte mit Kamera, Bildaufzeichnung und Monitor ausgestattet sein. Die Bildauswertung kann über einen PC mit Frame-Grabber vorgenommen werden. Ein für die Zwecke der Erfindung geeignetes Invers-Lichtmikroskop wird von der Carl Zeiss GmbH, D-73447 Oberkochen unter der Bezeichnung AXIOVERT angeboten.

Bei der Verwendung des erfindungsgemäßen Rasterkraftmikroskops zur Untersuchung des Verhaltens von Mikroteilchen bei der Adhäsion an Oberflächen wird das Mikroteilchen durch definierte Aspiration an der Mündung einer Mikropipette fixiert und fungiert als Sonde an der Spitze des Cantilevers. Man kann die Untersuchungen mit bekannten Betriebsweisen von Rasterkraftmikroskopen (konstante Kraft, variable Kraft, contact mode, tapping mode usw.) durchführen und sich bekannter Auswertungsmethoden bedienen. Beispielsweise kann man ein Bakterium an der Mündung der Mikropipette positionieren und Kraft-Abstands-Kurven aufnehmen, die Schlüsse auf das Adhäsionsverhalten gestatten und bei der Entwicklung von bakterienabweisenden Materialien hilfreich sind.

Bei einem anderen erfindungsgemäßen Verfahren bestimmt man mit extern präparierten Proben (z.B. an mehrere Tage im Brutschrank inkubierten Kulturen) die Haftung betimmter Bakterienstämme auf einem vorzugsweise durchsichtigen Substrat, indem man die Mündung der Mikropipette auf einem haftendes Bakterium positioniert, mit Unterdruck fixiert und über die Cantilever-Auslenkung die Kraft bestimmt. bei der das Bakterium sich vom Substrat abheben läßt.

## Patentansprüche

1. Rasterkraftmikroskop, dadurch gekennzeichnet, daß der Cantilever als Mikropipette ausgebildet und eine mit der Mikropipette verbundene Vorrichtung vorhanden ist, die eine Fixierung von Mikroteilchen an der Mündung der Mikropipette durch definierte Aspiration ermöglicht.

2. Rasterkraftmikroskop nach Anspruch 1, dadurch gekennzeichnet, daß die Mündung der Mikropipette einen Innendurchmesser von 400 nm bis 9 μm μm hat.

3. Rasterkraftmikroskop nach Anspruch 1 oder 2, dadurch gekennzeichnet, daß die Mikropipette einen Reflektor trägt.

4. Rasterkraftmikroskop nach Anspruch 3, dadurch gekennzeichnet, daß der Reflektor ein Glimmerplättchen ist oder ein Teil der Mikropipette plangeschliffen und mit reflektierendem Metall bedampft wurde.

5. Rasterkraftmikroskop nach einem der Ansprüche 1 bis 4, dadurch gekennzeichnet, daß die Vorrichtung zur Fixierung von Mikroteilchen durch definierte Aspiration zwei Niveaugefäße umfaßt, die über ein Schlauchsystem miteinander und mit der Mikropipette kommunizierend verbunden sind.

6. Rasterkraftmikroskop nach einem der Ansprüche 1 bis 5, dadurch gekennzeichnet, daß das Rasterkraftmikroskop mit einem Lichtmikroskop kombiniert wird, dessen optische Achse in der Achse der Kraftmessung angeordnet werden kann oder im Winkel von 90° zur Achse der Kraftmessung steht.

7. Rasterkraftmikroskop nach Anspruch 6, dadurch gekennzeichnet, daß das Lichtmikroskop ein Invers-Lichtmikroskop ist, das ein Objektiv mit 20- bis 100-facher Vergrößerung und einem Arbeitsabstand von <5mm hat.

8. Verfahren zur Untersuchung des Verhaltens von Mikroteilchen bei der Adhäsion an der Oberfläche von Substraten mittels Rasterkraftmikroskopie, dadurch gekennzeichnet, daß man ein Rasterkraftmikroskop verwendet, dessen Cantilever als Mikropipette ausgebildet ist, die mit einer Vorrichtung verbunden ist, die eine Fixierung von Mikroteilchen als Sonde an der Mündung der Mikropipette durch definierte Aspiration ermöglicht.

9. Verfahren nach Anspruch 8, dadurch gekennzeichnet, daß die Fixierung durch Unterdruck in der Mikropipette von 0,01 bis 100 mbar erfolgt.

## Figur 1

## Figur 2

Figur 3

# Figur 4

# Figur 5